# EUROPEAN PATENT APPLICATION

(11) **EP 3 817 106 A1**
(43) Date of publication of application: **05.05.2021**
(21) Application number: 19827365.8
(22) Date of filing: 25.06.2019
(51) Int. Cl.: H01M 4/60, H01G 11/48, H01G 11/84, H01M 4/137, H01M 4/36, H01M 10/0567

(54) **POSITIVE-ELECTRODE ACTIVE MATERIAL, POSITIVE ELECTRODE, POWER STORAGE DEVICE, AND METHOD FOR MANUFACTURING POSITIVE-ELECTRODE ACTIVE MATERIAL**

(30) Priority: 26.06.2018 JP 2018121332
(71) Applicant: NITTO DENKO CORPORATION, Ibaraki-shi Osaka 567-8680 (JP)
(72) Inventor: GOTO Chisato, Ibaraki-shi, Osaka 567-8680 (JP); YANO Masaya, Ibaraki-shi, Osaka 567-8680 (JP); TAKE Hiroyoshi, Ibaraki-shi, Osaka 567-8680 (JP)
(74) Representative: Hoffmann Eitle
(86) International application number: PCT/JP2019/025192
(87) International publication number: WO 2020/004398

(57) **Abstract**

An active material (1) for a positive electrode includes an aggregate (10) of an electrochemically active polymer having an oxidized repeat unit and a reduced repeat unit. The aggregate (10) includes a first portion (11) forming a surface of the aggregate 10 and a second portion 12 covered by the first portion 11. In the active material 1, the percentage content of the oxidized repeat unit in the first portion 11 on a weight basis is lower than the percentage content of the oxidized repeat unit in the second portion 12 on a weight basis.

## Description

### TECHNICAL FIELD

The present invention relates to an active material for a positive electrode, a positive electrode, a power storage device, and a method for producing an active material for a positive electrode.

### BACKGROUND ART

Electrochemically active polymers such as polyaniline have been known as active materials for positive electrodes of power storage devices such as secondary batteries and lithium-ion capacitors.

For example, Patent Literature 1 describes a non-aqueous electrolyte secondary battery that includes a positive electrode including an electrically conductive polymer such as polyaniline, a negative electrode including a carbonaceous material allowing insertion and desorption of an ion thereinto and therefrom, and an electrolyte solution containing a supporting salt having ion conductivity and a negative electrode film-forming agent. In examples in Patent Literature 1, a porous positive electrode is produced using a polyaniline powder in a reduced-dedoped state.

Patent Literature 2 describes a positive electrode for a power storage device that has excellent performance in rapid charge and discharge. This positive electrode includes an active material including at least one of polyaniline and a polyaniline derivative, an electrically conductive agent, and a binder. The proportion of an oxidized repeat unit of polyaniline in the active material is 45 weight% or more in the whole polyaniline active material. The sum of a polarity term and a hydrogen bonding term of Hansen solubility parameters of the binder is 20 MPa^{1/2} or less. In Patent Literature 2, a slurry is applied onto a current collector layer such as an aluminum foil to produce a positive electrode.

### CITATION LIST

### Patent Literature

Patent Literature 1: JP 2014-120227 A
Patent Literature 2: JP 2018-026341 A

### SUMMARY OF INVENTION

### Technical Problem

Patent Literature 1 does not describe production of a positive electrode using, as an active material, an electrically conductive polymer having an oxidized repeat unit. Patent Literature 2 states that the proportion of the oxidized repeat unit in the polyaniline active material is equal to or more than a given value in the positive electrode for a power storage device but does not describe uneven spatial distribution of the oxidized repeat unit in the polyaniline active material.

Therefore, the present invention provides an active material for a positive electrode, the active material including an aggregate of an electrochemically active polymer, the active material in which an oxidized repeat unit is distributed advantageously in the aggregate in terms of decreasing the internal resistance of a positive electrode. The present invention also provides a method for producing such an active material for a positive electrode.

### Solution to Problem

The present invention provides an active material for a positive electrode, including an aggregate of an electrochemically active polymer having an oxidized repeat unit and a reduced repeat unit, wherein
the aggregate includes a first portion forming a surface and a second portion covered by the first portion, and
the percentage content of the oxidized repeat unit in the first portion on a weight basis is lower than the percentage content of the oxidized repeat unit in the second portion on a weight basis.

The present invention provides a positive electrode including an active material layer including the above active material.

The present invention provides a power storage device, including:
an electrolyte layer;
a negative electrode disposed in contact with a first principal surface of the electrolyte layer; and
the above positive electrode disposed in contact with a second principal surface of the electrolyte layer.

The present invention provides a method for producing an active material for a positive electrode, including:
providing an aggregate of an electrochemically active polymer having an oxidized repeat unit; and
reducing the oxidized repeat unit present in a first portion forming a surface of the aggregate to decrease the percentage content of the oxidized repeat unit in the first portion on a weight basis to be lower than the percentage content of the oxidized repeat unit in a second portion of the aggregate on a weight basis, the second portion being covered by the first portion.

### Advantageous Effects of Invention

The above active material for a positive electrode is advantageous in terms of decreasing the internal resistance of a positive electrode. The above active material for a positive electrode can be produced according to the above production method.

### BRIEF DESCRIPTION OF DRAWINGS

FIG. 1 is a cross-sectional view schematically showing an example of the active material for a positive electrode according to the present invention.
FIG. 2A is a cross-sectional view schematically showing an example of the positive electrode according to the present invention.
FIG. 2B is a cross-sectional view schematically showing another example of the positive electrode according to the present invention.
FIG. 3 is a cross-sectional view schematically showing an example of the power storage device according to the present invention.
FIG. 4 shows a Raman mapping image of a cross-section of an active material according to Example 1.
FIG. 5 shows a Raman mapping image of a cross-section of an active material according to Comparative Example.
FIG. 6 shows Fourier transformation infrared absorption spectroscopy (FT-IR) spectra of samples according to Example 1 and Comparative Example.

### DESCRIPTION OF EMBODIMENTS

The present inventors invented the active material for a positive electrode according to the present invention based on the following new finding obtained through development of a technique advantageous in decreasing the internal resistance of a positive electrode of a power storage device.

As described in Patent Literature 2, when the proportion of an oxidized repeat unit of polyaniline is equal to or more than a given value, the polyaniline is characterized by excellent preservability of the polyaniline and excellent industrial handleability. However, as an active material for a positive electrode, such a polyaniline is less likely to be activated. In consideration of this point, a polyaniline powder in a reduced-dedoped state is used according to the technique described in Patent Literature 1 to produce a positive electrode.

According to the technique described in Patent Literature 2, a polyaniline in which the proportion of an oxidized repeat unit is 45 weight% or more is mixed with a given binder and a given conductive additive to form a positive electrode. Electrical conductivity is likely to be ensured by good affinity between the active material and the binder and appropriate contact of the conductive additive with the active material. Consequently, a large capacity can be steadily secured from the initial phase of a charge-discharge cycle. On the other hand, the present inventors focused on distribution of an oxidized repeat unit in an aggregate of an electrochemically active polymer having the oxidized repeat unit and made intensive studies to find out whether this distribution can be adjusted to be advantageous in terms of decreasing the internal resistance of a positive electrode. Through much trial and error, the internal resistance of a positive electrode has been finally successfully decreased by appropriately adjusting distribution of an oxidized repeat unit in an aggregate of an electrochemically active polymer.

Hereinafter, embodiments of the present invention will be described with reference to the drawings. The present invention is not limited to the following embodiments.

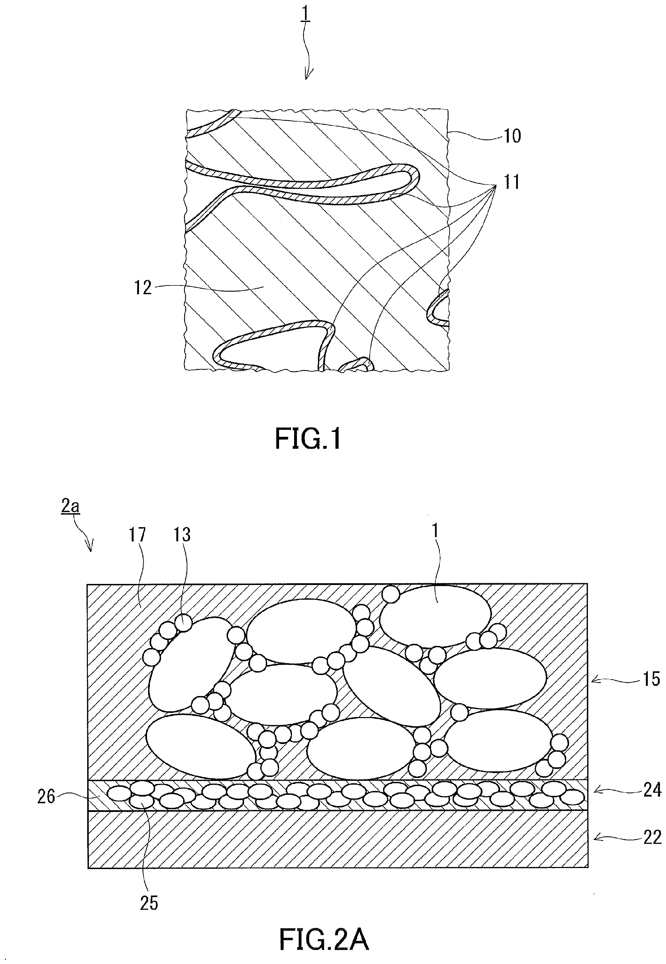

FIG. 1 is an enlarged cross-sectional view schematically showing a part near a surface layer of an example of the active material for a positive electrode according to the present invention. As shown in FIG. 1, an active material for a positive electrode 1 includes an aggregate 10 of an electrochemically active polymer having an oxidized repeat unit and a reduced repeat unit. The aggregate 10 includes a first portion 11 and a second portion 12. The first portion 11 is a portion forming a surface of the aggregate 10. Herein, the term "surface of the aggregate 10" refers to an interface between the aggregate 10 and a gas phase, a liquid phase, or a solid phase other than the aggregate 10. For example, when there is a pore inside the aggregate 10, a face of the aggregate 10, the face being adjacent to the pore, also falls under the definition of "surface of the aggregate 10." However, an interface, if any, formed inside the aggregate 10 by contact between the electrochemically active polymers does not fall under the definition of "surface of the aggregate 10." For example, a contact surface, if any, formed inside the aggregate 10 by contact between the outer surfaces of the electrochemically active polymers does not fall under the definition of "surface of the aggregate 10." The reduced repeat unit may also be present on such a contact surface. The second portion 12 is covered by the first portion 11. As shown in FIG. 1, the second portion 12 is located away from the surface of the aggregate 10. In the active material 1, the percentage content of the oxidized repeat unit in the first portion 11 on a weight basis is lower than the percentage content of the oxidized repeat unit in the second portion 12 on a weight basis. In other words, the percentage content of the reduced repeat unit in the first portion 11 on a weight basis is higher than the percentage content of the reduced repeat unit in the second portion 12 on a weight basis.

As just described, the first portion 11 has a relatively low proportion of the oxidized repeat unit and a relatively high proportion of the reduced repeat unit compared to those in the second portion 12, and that is thought to make activation of the active material 1 likely. The use of the active material 1 in a positive electrode can decrease the internal resistance of the positive electrode.

The shape of the aggregate 10 is not particularly limited as long as the aggregate 10 is formed by aggregation of the electrochemically active polymer. The aggregate 10 may be in the shape of a particle, a fibril, or a layer. The aggregate 10 may have an open pore.

The electrochemically active polymer forming the aggregate 10 is not particularly limited as long as the electrochemically active polymer includes the oxidized repeat unit and the reduced repeat unit. The electrochemically active polymer forming the aggregate 10 includes, for example, at least one of polyaniline and a polyaniline derivative. In this case, the internal resistance of a positive electrode can be decreased more reliably. Moreover, properties related to rapid charge and discharge of a power storage device are likely to be improved and the energy density of the power storage device is likely to increase.

The polyaniline can be obtained typically by electrolytic polymerization or chemical oxidative polymerization of aniline. The polyaniline derivative can be obtained typically by electrolytic polymerization or chemical oxidative polymerization of an aniline derivative. The aniline derivative has, for example, at least one of substituents such as alkyl, alkenyl, alkoxy, aryl, aryloxy, alkyl aryl, aryl alkyl, and alkoxyalkyl groups at a position other than the 4-position of aniline. Examples of the aniline derivative may include (i) o-substituted anilines such as o-methylaniline, o-ethylaniline, o-phenylaniline, o-methoxyaniline, and o-ethoxyaniline and (ii) m-substituted anilines such as m-methylaniline, m-ethylaniline, m-methoxyaniline, m-ethoxyaniline, and m-phenylaniline. For synthesis of the polyaniline derivative, one of the aniline derivatives may be used alone, or two or more of the aniline derivatives may be used in combination. The polyaniline and the polyaniline derivative may herein be collectively referred to as "polyaniline compound".

The aggregate 10 includes, for example, the oxidized repeat unit in an amount of 20 to 70% on a weight basis. As previously described, the spatial distribution of the oxidized repeat unit in the aggregate 10 is uneven. In spite of that, because the content of the oxidized repeat unit in the aggregate 10 as a whole is adjusted in the above range, the electrochemically active polymer 12 has good preservability and the active material 1 is likely to be activated. The aggregate 10 desirably includes the oxidized repeat unit in an amount of 35 to 60% on a weight basis.

The chemical structure of an oxidized repeat unit Ox and a reduced repeat unit Red of the polyaniline which is an example of the electrochemically active polymer is shown in the following formula (a). In the formula (a), x and y are each an integer of 1 or larger.

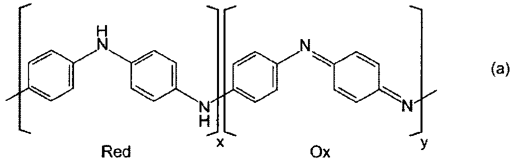

For example, when the electrochemically active polymer is the polyaniline compound, a process of polymerizing aniline and an aftertreatment of polyaniline are performed so that the content of the oxidized repeat unit in the aggregate 10 will be in the given range (20 to 70% on a weight basis). For example, the process of polymerizing aniline is performed in the presence of an oxidizing agent such as manganese dioxide to prepare polyaniline having a given content of the oxidized repeat unit. Thereafter, if necessary, exposure of the polyaniline to air for a given period of time or performance of a given reduction treatment is appropriately selected. The content of the oxidized repeat unit in the aggregate 10 can thus be adjusted in the given range (20 to 70% on a weight basis). It should be noted that it is difficult to adjust the percentage content of the oxidized repeat unit in the first portion 11 on a weight basis and the percentage content of the oxidized repeat unit in the second portion 12 on a weight basis to satisfy the above relation by adjusting the amount of the oxidizing agent or a reducing agent added in the polymerization process.

The content of the oxidized repeat unit in the aggregate 10 can be determined, for example, from a solid-state ¹³C NMR spectrum. The content of the oxidized repeat unit in the aggregate 10 can also be obtained from an oxidation index expressed in a ratio A640/A340 between an absorbance A640 at an absorption maximum at around 640 nm and an absorbance A340 at an absorption maximum at around 340 nm in an electron spectrum obtained using a spectrophotometer. The content of the oxidized repeat unit (the proportion of the oxidized repeat unit) in the aggregate 10 can be determined, for example, by a method described in JP 2018-026341 A, the paragraphs 0040 to 0051.

A positive electrode can be provided using the active material 1. As shown in FIG. 2A, a positive electrode 2a includes an active material layer 15 including the active material 1.

For example, the active material 1 including the aggregate 10 in the shape of a particle is dispersed in the active material layer 15. The aggregate 10 has an average particle diameter of, for example, more than 0.5 pm and 20 pm or less. The average particle diameter of the aggregate 10 can be determined, for example, by observing 50 or more particles of the aggregate 10 using an electron microscope such as a scanning electron microscope (SEM) and measuring the maximum diameters of the 50 or more particles of the aggregate 10. Alternatively, the average particle diameter of the aggregate 10 may be determined using a particle image analyzer which takes an image of a particle shape using a microscope and examines the particle shape by image analysis. Herein, the term "average particle diameter" refers to a median diameter (D50). A median diameter has a particle diameter value separating particles having a particle diameter larger than the value and particles having a particle diameter smaller than the value equally in number.

The active material layer 15 is typically porous. The active material layer 15 has a thickness of, for example, 1 to 500 µm and may have a thickness of 10 to 300 µm.

The content of the active material 1 in the active material layer 15 is, for example, 1% or more, desirably 5% or more, more desirably 20% or more, even more desirably 40% or more, and particularly desirably 60% or more on a weight basis. In this case, the energy density of a power storage device is likely to increase.

As shown in FIG. 2A, the active material layer 15 may further include an electrically conductive agent 13. The electrically conductive agent 13 is typically made of an electrically conductive material having properties that do not depend on voltage applied for charging and discharging a power storage device. The electrically conductive agent 13 can be an electrically conductive carbon material or a metal material. Examples of the electrically conductive carbon material include electrically conductive carbon black such as acetylene black and ketjen black and fibrous carbon materials such as carbon fibers and carbon nanotubes. The electrically conductive carbon material is desirably electrically conductive carbon black.

The content of the electrically conductive agent 13 in the active material layer 15 is, for example, 1 to 30%, desirably 4 to 25%, and more desirably 4 to 19% on a weight basis. In this case, the content of the electrically conductive agent is reduced and the electrochemically active polymer particles 12 can be activated more reliably. Consequently, the energy density of a power storage device is likely to increase.

As shown in FIG. 2A, the active material layer 15 may further include a binder 17. The binder 17 includes, for example, an elastomer. The elastomer may be natural rubber, a synthetic rubber, or a thermoplastic elastomer. The binder 17 is typically in contact with the active material 1 and the electrically conductive agent 13. The binder 17 binds the active material 1 and the electrically conductive agent 13. When the binder 17 includes the elastomer, no large stress is generated by a dimensional change which the active material 1 undergoes and which is caused by charging and discharging a power storage device and the binder 17 easily deforms. This is thought to be likely to improve the properties related to rapid charge and discharge of a power storage device.

The binder 17 includes, for example, a rubber material. In this case, the rubber material can be, for example, styrene-butadiene copolymer, acrylonitrile-butadiene copolymer, or methyl methacrylate-butadiene copolymer.

The content of the binder 17 in the active material layer 15 is, for example, 1 to 30%, desirably 4 to 25%, and more desirably 4 to 18% on a weight basis. In this case, the content of the binder 17 is reduced and the active material 1 can be appropriately dispersed in the active material layer 15. Consequently, the properties related to rapid charge and discharge of a power storage device can increase and the energy density of a power storage device is likely to increase.

The active material layer 15 may include an active material other than the active material 1, if necessary. The active material other than the active material 1 is, for example, a carbon material such as activated carbon. Activated carbon can be alkaline-activated carbon, steam-activated carbon, gas-activated carbon, or zinc chloride-activated carbon.

The active material layer 15 may further include an additive such as a thickener, if necessary. Examples of the thickener include methylcellulose, hydroxyethyl cellulose, polyethylene oxide, carboxymethyl cellulose, their derivatives, and their salts. Among these, carboxymethyl cellulose, its derivative, or its salt is desirably used as the thickener.

The content of the thickener in the active material layer 15 is, for example, 0.1 to 20%, desirably 1 to 10%, and more desirably 1 to 8% on a weight basis.

As shown in FIG. 2A, the positive electrode 2a further includes a current collector 22 and an electrically conductive layer 24. The current collector 22 is, for example, a foil or mesh made of a metal material such as nickel, aluminum, or stainless steel.

The electrically conductive layer 24 is disposed between the active material layer 15 and the current collector 22 and is in contact with the active material layer 15 and the current collector 22. By virtue of a function of the electrically conductive layer 24, the impedance of the positive electrode 2a is less likely to be high in a high-frequency region. This is considered advantageous in improving the properties related to rapid charge and discharge of a power storage device. The active material layer 15 and the current collector 22 may be brought into contact with each other by omitting the electrically conductive layer 24.

The electrically conductive layer 24 has a thickness of, for example, 0.1 pm to 20 µm. In this case, the positive electrode 2a is prevented from increasing in thickness and the properties related to rapid charge and discharge of a power storage device can be improved. The electrically conductive layer 24 desirably has a thickness of 0.1 pm to 10 pm and more desirably has a thickness of 0.1 pm to 5 pm.

The electrically conductive layer 24 includes, for example, electrically conductive particles 25 and a binder 26. The electrically conductive particles 25 are formed of a carbon material. The carbon material is, for example, graphite. The binder 26 is in contact with the electrically conductive particles 25. The binder 26 binds the electrically conductive particles 25. The binder 26 is, for example, a polymer such as carboxymethyl cellulose.

The electrically conductive layer 24 is formed, for example, using the given raw materials by coating, sputtering, vapor deposition, ion plating, or CVD. The electrically conductive layer 24 desirably can be formed by dispersing the electrically conductive particles 25 and the binder 26 in a dispersion medium to prepare a slurry, applying the slurry to a principal surface of the current collector 22 to form a coating film, and drying the coating film. The active material layer 15 can be formed thereafter by dispersing the active material 1 or a precursor of the active material 1, the electrically conductive agent 13, and the binder 17 in a dispersion medium to prepare a slurry, applying the slurry to the surface of the electrically conductive layer 24 to form a coating film, and drying the coating film. When the slurry contains the precursor of the active material 1, the precursor of the active material 1 is subjected to a given reduction treatment to generate the active material 1. The positive electrode 2a can be produced in this manner. An active material other than the electrochemically active polymer particles 12 and an additive such as the thickener are added, if necessary, to the slurry for forming the active material layer 15.

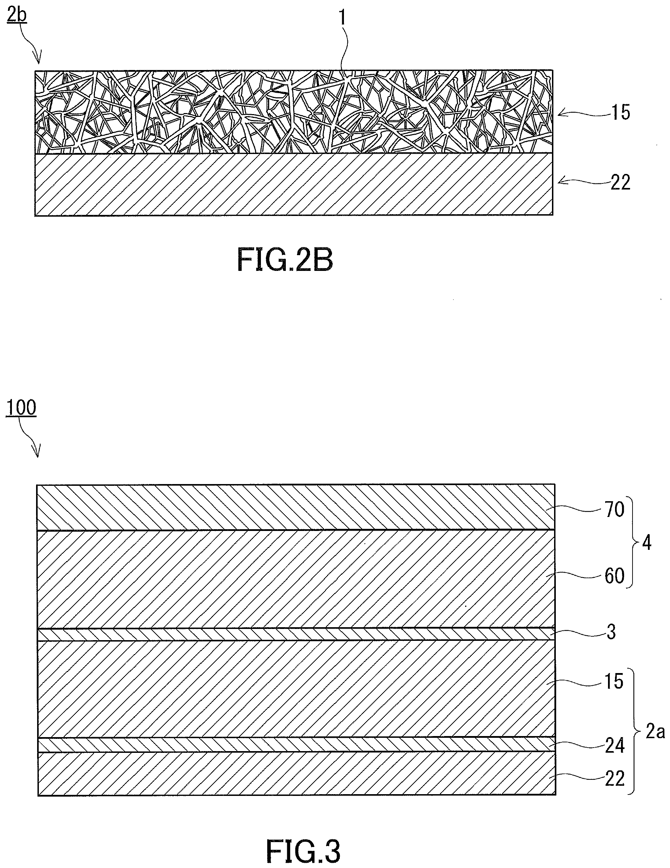

The positive electrode 2b shown in FIG. 2B can be provided using the active material 1. The positive electrode 2b is configured in the same manner as the positive electrode 2a, unless otherwise described. The components of the positive electrode 2b that are the same as or correspond to those of the positive electrode 2a are denoted by the same reference characters, and detailed descriptions of such components are omitted. The description given for the positive electrode 2a can apply to the positive electrode 2b, unless there is technical inconsistency.

In the positive electrode 2b, the positive material layer 15 having a porous structure is formed on the current collector 22 using the active material 1 which is the aggregate 10 in the shape of a fibril. The positive material layer 15 as just described can be obtained, for example, by generating an electrochemically active polymer by electrolytic polymerization.

An exemplary method of producing the active material 1 will be described. The method of producing the active material 1 includes, for example, the following steps (I) and (II).
(I) The aggregate 10 of an electrochemically active polymer having an oxidized repeat unit is provided.
(II) The oxidized repeat unit present in the first portion 11 forming a surface of the aggregate 10 is reduced to decrease the percentage content of the oxidized repeat unit in the first portion 11 on a weight basis to be lower than the percentage content of the oxidized repeat unit in the second portion 12 of the aggregate 10 on a weight basis, the second portion 12 being covered by the first portion 11.

The aggregate 10 provided in the step (I) corresponds to the precursor of the active material 1. For example, when the electrochemically active polymer having the oxidized repeat unit is polyaniline, the aggregate 10 can be obtained by electrolytic polymerization or chemical oxidative polymerization of aniline. The aggregate 10 provided in the step (I) may be in the shape of a powder or a fibril. The aggregate 10 may be provided in the shape of a layer including the aggregate 10. It is desirable that the oxidized repeat unit be evenly dispersed in the aggregate 10 provided in the step (I), and there is no significant difference between the percentage content of the oxidized repeat unit in the first portion 11 on a weight basis and the percentage content of the oxidized repeat unit in the second portion 12 on a weight basis in the aggregate 10 provided in the step (I).

In the step (II), for example, the aggregate 10 is brought into contact with a liquid containing a reducing agent in order to reduce the oxidized repeat unit present in the first portion 11. The reducing agent contained in the liquid thereby reduces the oxidized repeat unit present in the first portion 11, and the percentage content of the oxidized repeat unit in the first portion 11 on a weight basis can be decreased to be lower than the percentage content of the oxidized repeat unit in the second portion 12 of the aggregate 10 on a weight basis, the second portion 12 being covered by the first portion 11.

The concentration of the reducing agent in the liquid containing the reducing agent is, for example, 0.5 to 16 weight%. In this case, the oxidized repeat unit present in the first portion 11 of the aggregate 10 can be appropriately reduced. The concentration of this reducing agent is the concentration obtained before the liquid containing the reducing agent is brought into contact with the aggregate 10.

The reducing agent is not particularly limited as long as the reducing agent can reduce the oxidized repeat unit present in the first portion 11. The reducing agent includes, for example, at least one of vinylene carbonate and fluoroethylene carbonate. Such a reducing agent can appropriately reduce the oxidized repeat unit present in the first portion 11 of the aggregate 10.

The liquid containing the reducing agent may double as an electrolyte solution of a power storage device. In this case, the oxidized repeat unit present in the first portion 11 of the aggregate 10 can be reduced through assembling a power storage device and the process of producing the power storage device can be simplified. The step (II) may be performed before the power storage device is assembled.

As shown in FIG. 3, a power storage device 100 includes an electrolyte layer 3, a negative electrode 4, and the positive electrode 2a. The negative electrode 4 is disposed in contact with a first principal surface of the electrolyte layer 3. The positive electrode 2a is disposed in contact with a second principal surface of the electrolyte layer 3. The second principal surface is the principal surface opposite to the first principal surface. Since the power storage device 100 includes the positive electrode 2a, the internal resistance of the positive electrode of the power storage device 100 can be lowered by virtue of a function of the active material 1 in the positive electrode 2a. The power storage device 100 may include the positive electrode 2b instead of the positive electrode 2a.

The electrolyte layer 3 is composed of an electrolyte. The electrolyte layer 3 is, for example, a sheet including a separator impregnated with an electrolyte solution or a sheet made of a solid electrolyte. When the electrolyte layer 3 is a sheet made of a solid electrolyte, the electrolyte layer 3 may double as a separator.

The electrolyte composing the electrolyte layer 3 includes a solute and, if necessary, a solvent and an additive. In this case, the solute is, for example, a combination of a metal ion such as a lithium ion and a given counterion thereof. The counterion is, for example, a sulfonic acid ion, a perchloric acid ion, a tetrafluoroboric acid ion, a hexafluorophosphoric acid ion, a hexafluoroarsenic ion, a bis(trifluoromethanesulfonyl)imide ion, a bis(pentafluoroethanesulfonyl)imide ion, bis(fluorosulfonyl)imide, or a halogen ion. Specific examples of the electrolyte include LiCF₃SO₃, LiClO₄, LiBF₄, LiPF₆, LiAsF₆, LiN(SO₂CF₃)₂, LiN(SO₂C₂F₅), LiN(SO₂F)₂, and LiCl.

Examples of the solvent in the electrolyte include non-aqueous solvents (organic solvents) such as carbonate compounds, nitrile compounds, amide compounds, and ether compounds. Specific examples of the solvent include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane, and γ-butyrolactone. As the solvent in the electrolyte, one of the solvents may be used alone, or two or more of the solvents may be used in combination. A solution containing the solute dissolved in the solvent may be called "electrolyte solution".

The electrolyte layer 3 may include an electrolyte solution containing a reducing agent. As described above, the oxidized repeat unit present in the first portion 11 of the aggregate 10 is reduced by the reducing agent. In this case, whether the reducing agent is consumed is uncertain. The reducing agent remaining in the electrolyte solution after the generation of the active material 1 indicates that the amount of the reducing agent contained in the electrolyte solution was large enough to appropriately reduce the oxidized repeat unit present in the first portion 11 of the aggregate 10.

In the power storage device 100, the concentration of the reducing agent in the electrolyte solution is, for example, 0.1 to 15 weight%.

The reducing agent contained in the electrolyte solution includes, for example, at least one of vinylene carbonate and fluoroethylene carbonate.

The negative electrode 4 includes, for example, an active material layer 60 and a current collector 70. The active material layer 60 includes a negative electrode active material. The negative electrode active material is a metal or a material allowing insertion and desorption of an ion thereinto and therefrom. A metal lithium, a carbon material allowing insertion and desorption of a lithium ion thereinto and therefrom by an oxidation-reduction reaction, a transition metal oxide, silicon, or tin is desirably used as the negative electrode active material. The active material layer 60 is in contact with the first principal surface of the electrolyte layer 3.

The carbon material allowing insertion and desorption a lithium ion thereinto and therefrom is, for example, (i) activated carbon, (ii) coke, (iii) pitch, (iv) a baked product of a phenolic resin, a polyimide, or cellulose, (v) artificial graphite, (vi) natural graphite, (vii) hard carbon, or (vii) soft carbon.

The carbon material allowing insertion and desorption of a lithium ion thereinto and therefrom is preferably used as a main component of the negative electrode. The term "main component" as used herein refers to a component whose content is highest on a weight basis.

The current collector 70 is, for example, a foil or mesh made of a metal material such as nickel, aluminum, stainless steel, or copper.

A lithium-pre-doped negative electrode obtained by pre-doping a carbon material such as graphite, hard carbon, or soft carbon with lithium ions can be used as the negative electrode 4.

In the power storage device 100, a separator is typically disposed between the positive electrode 2a and the negative electrode 4. The separator prevents an electrical short circuit between the positive electrode 2a and the negative electrode 4. The separator is, for example, a porous sheet electrochemically stable and having high ion permeability, desirable mechanical strength, and insulation properties. The material of the separator is desirably (i) paper, (ii) non-woven fabric, (iii) a porous film made of resin such as polypropylene, polyethylene, or a polyimide.

An exemplary method for producing the power storage device 100 will be described. The separator is disposed between the positive electrode 1 and the negative electrode 2 to obtain a laminate. This laminate is put in a package made of an aluminum laminated film, followed by vacuum drying. Next, an electrolyte solution is introduced into the vacuum-dried package, which is then sealed. The power storage device 100 can thus be produced. The process of producing the power storage device 100 including, for example, the introduction of the electrolyte solution into the package is desirably carried out using a glove box in an inert gas atmosphere such as ultrapure argon gas.

The power storage device 100 may be produced in the shape of a film, a sheet, a rectangle, a cylinder, a button, or the like using a package other than a package made of an aluminum laminated film.

### EXAMPLES

Hereinafter, the present invention will be described in more detail by Examples. The present invention is not limited to Examples described below.

### <Example 1>

84.0 g of an aqueous tetrafluoroboric acid solution (special grade reagent, manufactured by Wako Pure Chemical Industries, Ltd.) (amount of substance of tetrafluoroboric acid: 0.402 mol) having a concentration of 42 weight% was added to a glass beaker containing 138 g of ion-exchange water. To the resulting mixture was further added 10.0 g (0.107 mol) of aniline under stirring with a magnetic stirrer. Immediately after the addition of aniline to the aqueous tetrafluoroboric acid solution, aniline was dispersed in the aqueous tetrafluoroboric acid solution in the form of oily liquid drops. Then, aniline dissolved in water in several minutes, and a homogeneous transparent aqueous solution was obtained. The aqueous solution thus obtained was cooled to -4°C or lower using a constant-temperature chamber. Next, 11.63 g (0.134 mol) of a manganese dioxide powder (1st grade reagent, manufactured by Wako Pure Chemical Industries, Ltd.) as an oxidizing agent was added to the aqueous solution in such small batches that the temperature of the mixture in the beaker did not exceed -1°C. By the addition of the oxidizing agent to the aqueous solution, the aqueous solution immediately turned blackish green. The aqueous solution was then kept stirred for a while, by which a blackish green solid began to be generated.

After the oxidizing agent was added in this manner over 80 minutes, the mixture containing the reaction product was further stirred for 100 minutes under cooling. Thereafter, the resulting solid was subjected to filtration through a No. 2 filter paper (manufactured by Toyo Roshi Kaisha, Ltd.) using a Buechner funnel and a filter flask under reduced pressure to obtain a powder. The powder was stirred and washed in an about 2 mol/L aqueous tetrafluoroboric acid solution using a magnetic stirrer. Next, the powder was stirred and washed several times in acetone and then subjected to filtration under reduced pressure. The resulting powder was vacuum-dried at room temperature (25°C) for 10 hours to obtain 12.5 g of electrically conductive polyaniline including tetrafluoroboric acid as a dopant. This electrically conductive polyaniline was a vivid green powder.

The electrically conductive polyaniline powder in a doped state was put in a 2 mol/L aqueous sodium hydroxide solution, which was stirred in a 3L separable flask for 30 minutes to dedope the electrically conductive polyaniline powder including tetrafluoroboric acid as a dopant through neutralization. The polyaniline dedoped until a filtrate became neutral was washed with water, stirred and washed in acetone, and subjected to filtration using a Buechner funnel and a filter flask under reduced pressure. A dedoped polyaniline powder was obtained on a No. 2 filter paper. This powder was vacuum-dried at room temperature for 10 hours to obtain a polyaniline powder which was brown and in an oxidized-dedoped state. The polyaniline powder had an average particle diameter (D50) of 3 pm. The average particle diameter of the polyaniline powder was calculated using Morphologi G3 manufactured by Malvern Panalytical Ltd.

The oxidation index of the polyaniline powder was determined to be 0.86. The proportion of the polyaniline oxidized repeat unit determined from a solid-state NMR spectrum was 55 weight% in the whole polyaniline.

10 g (67 parts by weight) of the polyaniline powder (oxidized repeat unit: 55 weight%) in an oxidized-dedoped state, 2.678 g (18 parts by weight) of an electrically conductive carbon black (Denka Black manufactured by Denki Kagaku Kogyo K.K.) powder as an electrically conductive agent, 1.765 g (12 parts by weight) of styrene-butadiene copolymer as a binder, 22.04 g (3 parts by weight) of sodium carboxymethyl cellulose diluted to 2 weight%, and 13.13 g of water were added, stirred using a planetary centrifugal vacuum mixer (Awatori Rentaro ARV-310 manufactured by THINKY CORPORATION) at 2000 rpm for 10 minutes, and defoamed for 3 minutes. A slurry A was obtained in this manner. In the styrene-butadiene copolymer, the copolymerization ratio of styrene:butadiene[1,4-form]:butadiene[1,2-form] was 61:31:8. The solids concentration was 30 weight% in the slurry A.

A slurry B was prepared by mixing and stirring 18 parts by mass of carbon black as electrically conductive particles, 2 parts by mass of carboxymethyl cellulose as a biner, and 80 parts by mass of pure water.

A 20-µm-thick aluminum foil was prepared as a current collector. The slurry B was applied to one principal surface of the aluminum foil using a bar coater No. 3 to form a coating film. The coating film was dried in an environment at 120°C for 10 minutes to form an electrically conductive layer according to Example 1. The electrically conductive layer according to Example 1 had a thickness of 1 µm. Subsequently, with the use of a desktop automatic film applicator (manufactured by Tester Sangyo Co., Ltd.) adjusted to form a 185-µm-thick coating film, a coating film was formed by applying the slurry B onto the electrically conductive layer at an application speed of 10 mm/s with a doctor blade applicator equipped with a micrometer. The coating film was left at room temperature (25°C) for 45 minutes, and was then dried on a hot plate at a temperature of 100°C to form a polyaniline-including layer. A sheet for a positive electrode according to Example 1 was produced in this manner. The active material layer had a thickness of 73 pm.

In a glove box whose environment was maintained at a dew point of -60°C or lower and an oxygen concentration of 1 ppm or less, a separator (manufactured by NIPPON KODOSHI CORPORATION, product name: TF40-50) was placed on a graphite negative electrode sheet equipped with a current collector tab. Next, an electrode including a metal lithium foil attached to a stainless steel mesh equipped with a current collector tab was placed on the separator. The electrode was placed in such a manner that the metal lithium foil was in contact with the separator. This laminate was put in a bag-shaped aluminum laminated film package. The package included a pair of rectangular aluminum laminated films sealed on three sides and having one open side to form an opening. Next, a LiPF₆ carbonate solution having a concentration of 1.2 M (mol/dm³) was introduced as an electrolyte solution into the package. This carbonate solution contained ethylene carbonate (EC), ethyl methyl carbonate (EMC), and dimethyl carbonate (DMC) as carbonates. This carbonate solution also contained vinylene carbonate (VC) as an additive. Next, the opening of the package was sealed with the current collector tabs protruded from the opening of the package. A laminate cell for producing a lithium-pre-doped negative electrode was obtained in this manner. Next, this laminate cell was taken out of the glove box. In a constant-temperature chamber maintained at 25°C, three cycles of charge and discharge were carried out in the potential range of 2.0 V to 0.01 V at a current value corresponding to 0.2 C with respect to the capacity of the graphite negative electrode sheet and, at the end, a reaction in which lithium ions were inserted in graphite was carried out until the graphite negative electrode sheet was charged to 75% of its capacity. A laminate cell including a lithium-pre-doped negative electrode sheet was produced in this manner.

The laminate cell including a lithium-pre-doped negative electrode sheet was put in the glove box again. A sealed portion of the laminate cell was cut off to take out the lithium-pre-doped negative electrode sheet. Next, the sheet for a positive electrode according to Example 1, two separators, and the lithium-pre-doped negative electrode sheet were placed in layers in such a manner that the two separators were located between the sheet for a positive electrode according to Example 1 and the lithium-pre-doped negative electrode sheet. A non-woven fabric (manufactured by NIPPON KODOSHI CORPORATION, product name: TF40-50) was used as the separators. The positive electrode was equipped with a current collector tab. Then, a third electrode including a lithium foil wound around an end of a nickel current collector tab was inserted between the two separators as a reference electrode. Next, the laminate consisting of the positive electrode, the separator, the reference electrode, the separator, and the negative electrode sheet was sandwiched by aluminum laminated films and the aluminum laminated films were sealed on three sides to produce a bag-shaped package having one open side. Next, a LiPF₆ carbonate solution having a concentration of 1.2 M (mol/dm³) was introduced as an electrolyte solution into the package. This carbonate solution contained ethylene carbonate (EC), ethyl methyl carbonate (EMC), and dimethyl carbonate (DMC) as carbonates. This electrolyte solution also contained vinylene carbonate (VC) as a reducing agent. The concentration of the vinylene carbonate in the electrolyte solution was 1 weight%. Next, the opening of the package was sealed with the current collector tab of the positive electrode, the current collector tab of the reference electrode, and the current collector tab of the negative electrode sheet protruded from the opening of the package. A power storage device according to Example 1 was produced in this manner.

### <Example 2>

A laminate cell including a lithium-pre-doped negative electrode sheet was produced in the same manner as in Example 1, except that fluoroethylene carbonate, instead of vinylene carbonate, was added as an additive to the electrolyte solution. Additionally, a power storage device according to Example 2 was produced in the same manner as in Example 1, except that fluoroethylene carbonate (FEC), instead of vinylene carbonate, was added as a reducing agent to the electrolyte solution in the production of the power storage device. The concentration of the fluoroethylene carbonate in the electrolyte solution was 1 weight%.

### <Comparative Example>

A power storage device according to Comparative Example was produced in the same manner as in Example 1, except that vinylene carbonate was not added to the electrolyte solution in the production of the laminate cell including the lithium-pre-doped negative electrode sheet and the power storage device.

### (Measurement of capacity)

Each of the power storage devices according to Examples and Comparative Example was taken out of the glove box. In a constant-temperature chamber maintained at 25°C, 10 cycles of charge and discharge were carried out in the voltage range of 3.8 V to 2.2 V at a current value corresponding to 1 C. The discharge capacity [mAh/g] at the tenth cycle was measured. The results are shown in Table 1.

### (Internal resistance)

The internal resistance of the positive electrode was measured using the power storage devices according to Examples and Comparative Example. A potential difference between the positive electrode and the reference electrode was employed as the potential of the positive electrode. Discharge was carried out at a current corresponding to 10 C. The difference (V₀ - V₁) between a potential V₀ of the positive electrode just before the discharge and a potential V₁ of the positive electrode 0.1 seconds after the start of the discharge was divided by a discharge current I_{10C} to determine the internal resistance of the positive electrode. In the internal resistance measurement, the power storage devices charged at 25°C were placed in an environment at 25°C and -30°C during discharge. The results are shown in Table 1.

### (Microscope Raman spectroscopy)

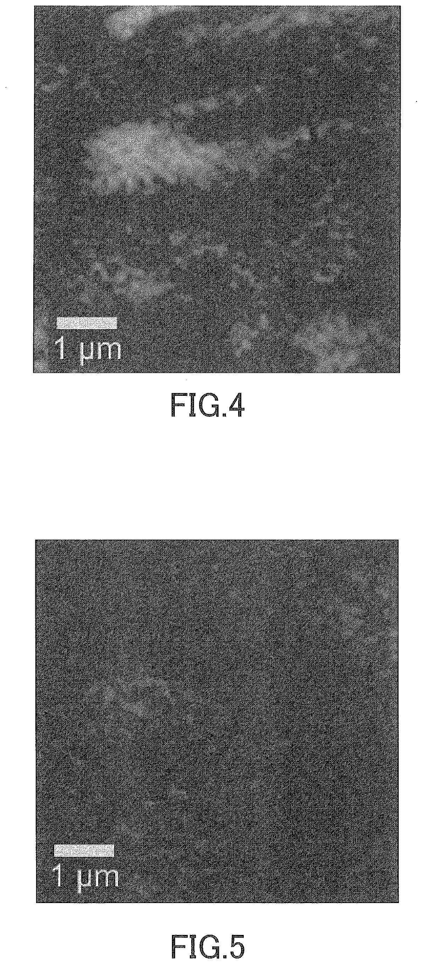

The positive electrodes were taken out from the power storage devices according to Example 1 and Comparative Example. The positive electrodes taken out were each subjected to ion polishing to expose a cross-section of the positive electrode. Samples for microscope Raman spectrometry according to Example 1 and Comparative Example were thus produced. Microscope Raman spectrometry was carried out for each of the samples for microscope Raman spectrometry using a Microscope Raman spectrometer (manufactured by WITec GmbH; product name: alpha300 RSA) to obtain a Raman mapping image of a cross-section of the active material (polyaniline) of the positive electrode. Using the obtained image, a Raman spectrum was normalized at a peak attributed to quinoid derived from the oxidized repeat unit at around 1500 cm⁻¹, and a peak attributed to benzene derived from a reduced repeat unit at around 1600 cm⁻¹ was mapped. The results are shown in FIG. 4 and FIG. 5. In FIG. 4 and FIG. 5, bright whitish areas are where the spectral intensity at a wavenumber derived from the reduced repeat unit of the polyaniline is high in each Raman spectrum.

### (Infrared absorbance spectroscopy)

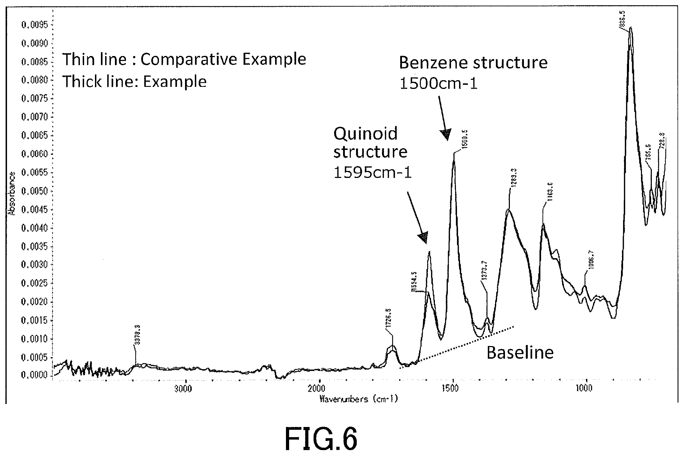

Samples for infrared absorbance spectrometry according to Example 1 and Comparative Example were produced from the positive electrodes taken out of the power storage devices according to Example 1 and Comparative Example. Infrared absorbance spectrometry was carried out for the samples for infrared absorbance spectrometry using a Fourier transformation infrared absorption (FT-IR) spectrophotometer (manufactured by Thermo Fisher Scientific K. K.; product name: Nicolet 6700/Thunderdome). In the measurement, a surface of each of the positive electrodes was pressed against a Ge crystal included in a detector. In this case, the analysis depth was 1 pm. FT-IR spectra obtained from the samples for infrared absorbance spectrometry according to Example 1 and Comparative Example are shown in FIG. 6. In these FT-IR spectra, the area Aox of a peak appearing at around a wavenumber (1595 cm⁻¹) corresponding to the oxidized repeat unit (quinoid structure) and the area Ared of a peak appearing at around a wavenumber (1500 cm⁻¹) corresponding to the reduced repeat unit (benzene structure) were determined, and the ratio Ared/Aox was calculated. The results are shown in Table 2. As a result of the calculation, it is indicated that the abundance ratio of the reduced repeat unit on a surface of the active material included in the positive electrode taken out of the power storage device according to Example 1 is higher than the abundance ratio of the reduced repeat unit on a surface of the active material included in the positive electrode taken out of the power storage device according to Comparative Example.

FIG. 4 indicates that in the active material (polyaniline) included in the positive electrode taken out of the power storage device according to Example 1, the abundance ratio of the reduced repeat unit in a portion near a surface of the active material is higher than the abundance ratio of the reduced repeat unit in a portion inwardly away from the surface of the active material. In other words, the abundance ratio of the oxidized repeat unit in the portion forming the surface of the active material is lower than the abundance ratio of the oxidized repeat unit in the portion inwardly away from the surface of the active material active material. On the other hand, according to FIG. 5, the abundance ratio of the reduced repeat unit is not greatly different between a portion forming a surface of the active material (polyaniline) included in the positive electrode taken out of the power storage device according to Comparative Example and a portion inwardly away from the surface thereof. It can be thought that in the positive electrode of the power storage device according to Example 1, the oxidized repeat unit present on the surface of the active material was partially reduced by the vinylene carbonate contained in the electrolyte solution.

As shown in Table 1, the discharge capacities of the power storage devices according to Examples 1 and 2 were greater than the discharge capacity of the power storage device according to Comparative Example. Moreover, the internal resistances of the positive electrodes of the power storage devices according to Examples 1 and 2 at 25°C were far lower than the internal resistance of the positive electrode of the power storage device according to Comparative Example at 25°C. Additionally, the internal resistance of the positive electrode of the power storage device according to Example 1 at -30°C was lower than the internal resistance of the positive electrode of the power storage device according to Comparative Example at -30°C. It is indicated that when the rate of the oxidized repeat unit in the portion forming the surface of the active material of the positive electrode is lower than the rate of the oxidized repeat unit in the portion inwardly away from the surface of the active material, the internal resistance of the positive electrode of the power storage device can be decreased.

**[Table 1]**

| | Reducing agent | Discharge capacity [mAh/g] | Internal resistance of positive electrode at 25°C [Ω] | Internal resistance of positive electrode at -30°C [Ω] |
|---|---|---|---|---|
| Example 1 | VC | 123 | 0.8 | 20.9 |
| Example 2 | FEC | 121 | 0.4 | - |
| Comparative Example | N/A | 116 | 4.4 | 31.3 |

**[Table 2]**

| | Ared/Aox | Peak area Aox | Peak area Ared |
|---|---|---|---|
| Example 1 | 2.81 | 0.0816 | 0.2295 |
| Comparative Example | 2.20 | 0.0954 | 0.2098 |

## Claims

1. An active material for a positive electrode, comprising an aggregate of an electrochemically active polymer having an oxidized repeat unit and a reduced repeat unit, wherein
the aggregate comprises a first portion forming a surface and a second portion covered by the first portion, and
the percentage content of the oxidized repeat unit in the first portion on a weight basis is lower than the percentage content of the oxidized repeat unit in the second portion on a weight basis.

2. The active material according to claim 1, wherein the electrochemically active polymer comprises at least one of polyaniline and a polyaniline derivative.

3. The active material according to claim 1 or 2, wherein the aggregate comprises the oxidized repeat unit in an amount of 20 to 70% on a wight basis.

4. A positive electrode comprising an active material layer comprising the active material according to any one of claims 1 to 3.

5. The positive electrode according to claim 4, wherein the active material layer further comprises a conductive additive.

6. A power storage device, comprising:
an electrolyte layer;
a negative electrode disposed in contact with a first principal surface of the electrolyte layer; and
the positive electrode according to claim 4 or 5 disposed in contact with a second principal surface of the electrolyte layer.

7. The power storage device according to claim 6, wherein
the electrolyte layer comprises an electrolyte solution containing a reducing agent, and
the concentration of the reducing agent in the electrolyte solution is 0.1 to 15 weight%.

8. The power storage device according to claim 7, wherein the reducing agent comprises at least one of vinylene carbonate and fluoroethylene carbonate.

9. A method for producing an active material for a positive electrode, comprising:
providing an aggregate of an electrochemically active polymer having an oxidized repeat unit; and
reducing the oxidized repeat unit present in a first portion forming a surface of the aggregate to decrease the percentage content of the oxidized repeat unit in the first portion on a weight basis to be lower than the percentage content of the oxidized repeat unit in a second portion of the aggregate on a weight basis, the second portion being covered by the first portion.

10. The method according to claim 9, wherein the oxidized repeat unit present in the first portion is reduced by bringing the aggregate into contact with a liquid containing a reducing agent.

11. The method according to claim 10, wherein the concentration of the reducing agent in the liquid is 0.5 to 16 weight%.

12. The method according to claim 11, wherein the reducing agent comprises at least one of vinylene carbonate and fluoroethylene carbonate.

13. The method according to any one of claims 10 to 12, wherein the liquid doubles as an electrolyte solution of the power storage device.
